# EUROPEAN PATENT APPLICATION

(11) **EP 4 478 655 A1**
(43) Date of publication of application: **18.12.2024**
(21) Application number: 23207470.8
(22) Date of filing: 02.11.2023
(51) Int. Cl.: H04L 9/08, G06F 21/00, H04L 9/40, H04L 9/00

(54) **APPARATUS, SYSTEM, AND METHOD FOR ACHIEVING QUANTUM SECURE DATA IN MULTI-TENANT ENVIRONMENTS**

(30) Priority: 15.06.2023 IN 202311040671; 11.08.2023 US 202318448808
(71) Applicant: Juniper Networks, Inc., Sunnyvale, CA 94089 (US)
(72) Inventor: C G, Siddeshwara Prasad, Sunnyvale, 94089 (US); Kenchaiah, Nagaraj, Sunnyvale, 94089 (US); Shah, Devang H, Sunnyvale, 94089 (US)
(74) Representative: D Young & Co LLP

(57) **Abstract**

A disclosed computing device capable of achieving quantum secure data in multi-tenant environments may include (1) a cooling device and (2) circuitry communicatively coupled to the cooling device, wherein the circuitry is configured to (A) alternate between periods of high computing activity that increases heat emission and periods of low computing activity that decreases the heat emission and (8) direct the cooling device to decrease cooling power during the periods of high computing activity and increase the cooling power during the periods of low computing activity. Various other apparatuses, systems, and methods are also disclosed.

## Description

### BACKGROUND

Multi-tenant environments are often deployed and/or configured to enable different entities, customers, and/or tenants to selectively access and/or obtain telemetry data via the cloud. Unfortunately, some multi-tenant environments may have certain shortcomings and/or deficiencies that negatively impact and/or impair the experiences of such entities, customers, and/or tenants. For example, a conventional multi-tenant environment that implements shared telemetry services may be unable to ensure and/or guarantee data confidentiality (e.g., encryption-decryption dynamics) across all the tenants. In another example, a conventional multi-tenant environment that implements independent and/or per-tenant telemetry services may be cost-prohibitive and/or impractical.

Additionally or alternatively, a conventional multi-tenant environment may fail to ensure and/or guarantee that only authorized and/or trusted users are able to access certain telemetry data. Further, a conventional multi-tenant environment may handle and/or distribute telemetry data that is not necessarily quantum safe and/or secure.

### SUMMARY

The present approaches may provide additional and/or improved apparatuses, systems, and methods for achieving quantum secure data in multi-tenant environments.

Particular aspects are set out in the appended independent claims. Various optional embodiments are set out in the dependent claims.

As will be described in greater detail below, the instant disclosure generally relates to apparatuses, systems, and methods for achieving quantum secure data in multi-tenant environments. In one example, a system for accomplishing such a task may include at least one network device, at least one collector, and/or at least one service. In this example, the service may be configured and/or programmed to (1) provide, to the network device and the collector, a key identifier that enables the network device to generate an encryption key for encrypting one or more logs and enables the collector to decrypt the logs, (2) provide, to the network device, one or more policy tokens representative of one or more policies that control access to the logs, and/or (3) provide, to the collector, the policy tokens to enable the collector to enforce the policies represented by the policy tokens applied by the network device to the logs.

Similarly, a server that facilitates and/or supports quantum secure data in multi-tenant environments may include at least one storage device configured to maintain a database of policy tokens representative of policies that control access to certain logs. In one example, the server may also include circuitry communicatively coupled to the storage device. In this example, the circuitry may be configured and/or programmed to (1) provide, to a network device and a collector, a key identifier that enables the network device to generate an encryption key for encrypting one or more logs and enables the collector to decrypt the one or more logs, (2) provide, to the network device, one or more policy tokens representative of one or more policies that control access to the one or more logs, and/or (3) provide, to the collector, the one or more policy tokens to enable the collector to enforce the one or more policies represented by the one or more policy tokens applied by the network device to the one or more logs.

A corresponding method may include (1) providing, by a server to a network device, a key identifier that enables the network device to generate an encryption key for encrypting one or more logs, (2) providing, by the server to a collector, the key identifier to enable the collector to decrypt the logs, (3) providing, by the server to the network device, one or more policy tokens representative of one or more policies that control access to the log, and/or (4) providing, by the server to the collector, the policy tokens to enable the collector to enforce the policies represented by the policy tokens applied by the network device to the logs.

Features from any of the above-mentioned embodiments may be used in combination with one another in accordance with the general principles described herein. These and other embodiments, features, and advantages will be more fully understood upon reading the following detailed description in conjunction with the accompanying drawings and claims.

### BRIEF DESCRIPTION OF THE DRAWINGS

The accompanying drawings illustrate a number of example embodiments and are a part of the specification. Together with the following description, these drawings demonstrate and explain various principles of the instant disclosure.
FIG. 1 is an illustration of an example server capable of facilitating and/or supporting quantum secure data in multi-tenant environments in accordance with one or more embodiments of this disclosure.
FIG. 2 is an illustration of an example system capable of achieving and/or providing quantum secure data in multi-tenant environments in accordance with one or more embodiments of this disclosure.
FIG. 3 is an illustration of an example system capable of achieving and/or providing quantum secure data in multi-tenant environments in accordance with one or more embodiments of this disclosure.
FIG. 4 is an illustration of an example distributed ledger for maintaining and/or distributing records that associate device identifiers, key identifiers, and/or policy tokens in accordance with one or more embodiments of this disclosure.
FIG. 5 is an illustration of an example system capable of achieving and/or providing quantum secure data in multi-tenant environments in accordance with one or more embodiments of this disclosure.
FIG. 6 is a flow diagram of an example method for achieving and/or providing quantum secure data in multi-tenant environments in accordance with one or more embodiments of this disclosure.
FIG. 7 is a block diagram of an example computing system capable of implementing and/or being used in connection with one or more of the embodiments described and/or illustrated herein.

Throughout the drawings, identical reference characters and descriptions indicate similar, but not necessarily identical, elements. While the example embodiments described herein are susceptible to various modifications and alternative forms, specific embodiments have been shown by way of example in the drawings and will be described in detail herein. However, the example embodiments described herein are not intended to be limited to the particular forms disclosed. Rather, the instant disclosure covers all modifications, equivalents, and alternatives falling within the scope of the appended claims.

### DETAILED DESCRIPTION

The present disclosure describes various apparatuses, systems, and methods for achieving quantum secure data in multi-tenant environments. In some examples, data may be considered and/or deemed quantum secure or safe if quantum computing is unable to breach and/or obtain readable forms of such data during transit. As will be explained in greater detail below, embodiments of the instant disclosure may include and/or involve a multi-tenant system that provides both a telemetry encryption service for securing data and a telemetry authorization service for facilitating selective access to such data. Additionally or alternatively, embodiments of the instant disclosure may include and/or involve a multi-tenant system that provides and/or offers policy-based access to quantum secure telemetry data for and/or across multiple tenants.

In some examples, a network administrator may enter and/or provide input to a telemetry encryption and authorization service (TEAS) that secures telemetry data and/or offers policy-based access to such data for authorized and/or trusted users. In one example, the input entered and/or provided by the network administrator may define, describe, specify, and/or delineate certain policies that control users' abilities to access, read, and/or obtain logs generated and/or compiled by corresponding network devices. In this example, the TEAS may create, generate, and/or release such policies based at least in part on the input. Additionally or alternatively, the TEAS may distribute and/or provide one or more of policy tokens representative of such policies to the network devices for classifying and/or labelling telemetry data and/or logs in accordance with such policies.

In some examples, the TEAS may serve, function, and/or act as a key server. For example, the TEAS may create, generate, and/or release one or more secret seed values and/or key identifiers, such as post-quantum pre-shared key identifiers (PQPSK IDs). In one example, the TEAS may share one or more of the secret seed values and/or key identifiers with certain network devices. In this example, the network devices may generate and/or produce encryption keys, such as PQPSK keys, with and/or from the secret seed values and/or key identifiers. These network devices may then encrypt telemetry data and/or logs with the encryption key and/or append appropriate policy tokens to the telemetry data and/or logs before providing the same to a collector.

In some examples, the TEAS may upload and/or provide the policy tokens and/or key identifiers to a distributed ledger (such as a blockchain) in connection with one or more transactions. In one example, the collector may fetch and/or obtain the policy tokens and/or key identifiers from the distributed ledger. In this example, the collector may decrypt the telemetry data and/or logs with the key identifiers. Additionally or alternatively, the collector may determine which users are authorized to access, read, and/or obtain the telemetry data and/or logs based at least in part on the policy tokens. For example, if a user requests to access and/or view certain telemetry data and/or logs, the collector may confirm whether the user is authorized for such access and/or viewing based at least in part on the corresponding policy tokens. Upon confirming that the user is so authorized, the collector may then provide and/or deliver decrypted versions of the telemetry data and/or logs to the user in accordance with the policies.

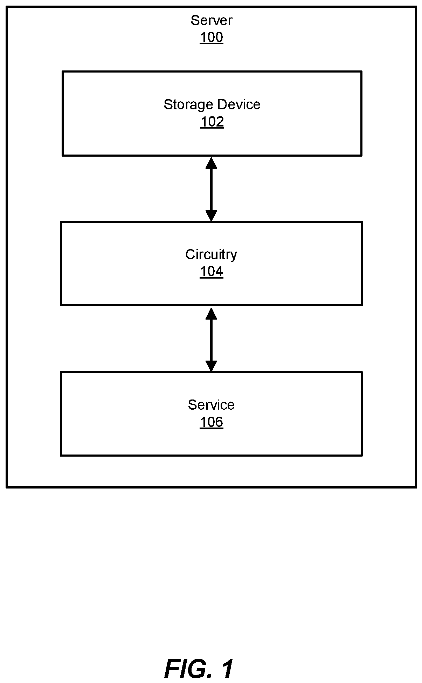

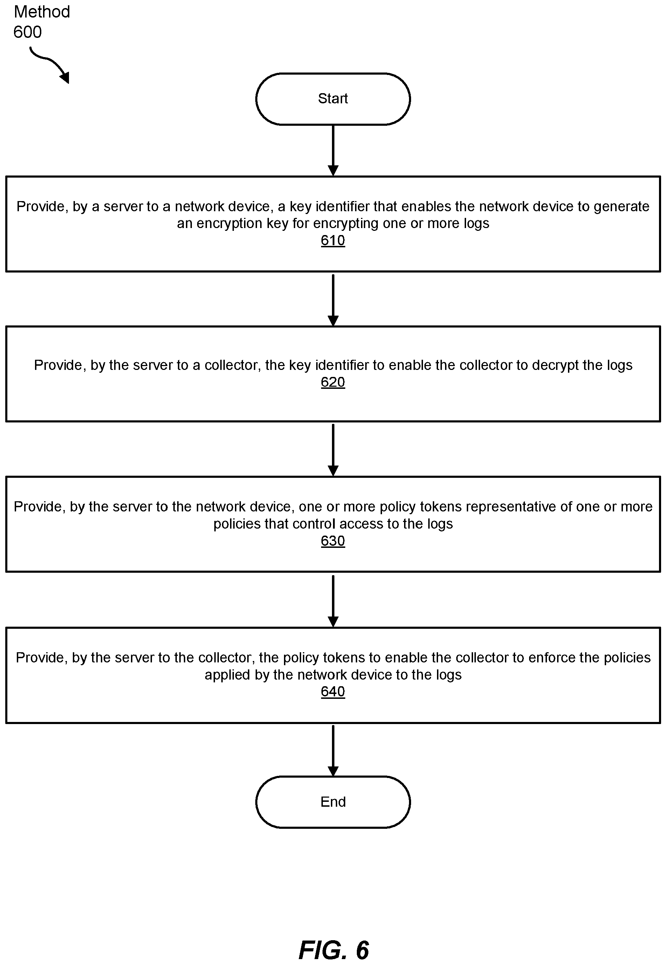

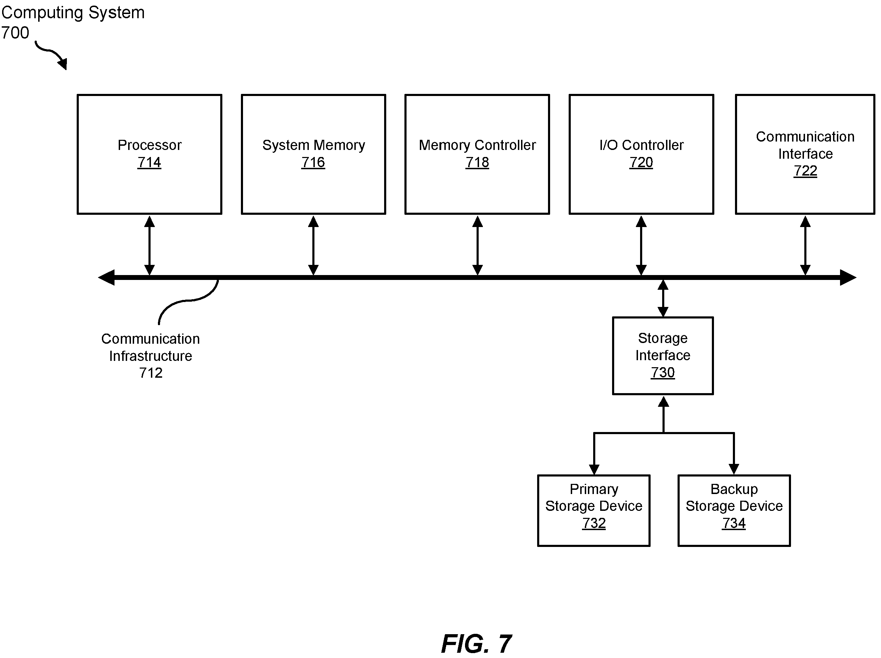

The following will provide, with reference to FIGS. 1-5, detailed descriptions of example devices, systems, and corresponding implementations for achieving quantum secure data in multi-tenant environments. Detailed descriptions of an example method for achieving quantum secure data in multi-tenant environments will be provided in connection with FIG. 6. In addition, detailed descriptions of an example computing system for carrying out such a method will be provided in connection with FIG. 7.

FIG. 1 illustrates an example server 100 capable of achieving quantum secure data in multi-tenant environments. As illustrated in FIG. 1, example server 100 may include and/or represent a storage device 102, circuitry 104, and/or a service 106. In some examples, circuitry 104 may be communicatively and/or electrically coupled to storage device 102. Additionally or alternatively, circuitry 104 may execute and/or perform service 106. Accordingly, when executed and/or performed by circuitry 104, service 106 may direct and/or cause circuitry 104 to implement and/or complete various actions and/or tasks, including any of those described below in connection with FIGS. 1-6.

In some examples, service 106 may be configured and/or programmed to provide a key identifier to a network device and/or a collector. In one example, the key identifier may enable the network device to generate an encryption key for encrypting one or more telemetry logs. Additionally or alternatively, the key identifier may enable the collector to decrypt the telemetry logs for viewing by authorized users.

In some examples, service 106 may also be configured and/or programmed to provide one or more policy tokens to the network device. In one example, the policy tokens may correspond to and/or represent one or more policies that control access to the telemetry logs. In this example, the network device may apply the policy tokens to the telemetry logs before providing and/or sending the same to the collector.

In some examples, service 106 may be further configured and/or programmed to provide the policies and/or policy tokens to the collector (e.g., via a distributed ledger and/or blockchain). In one example, the policies and/or policy tokens may enable the collector to enforce the policies on the telemetry logs based at least in part on the policy tokens applied by the network device to the telemetry logs. For example, the collector may provide authorized users with access to read and/or view the telemetry logs in accordance with the corresponding policies. In this example, the collector may also deny such access to unauthorized users in accordance with the corresponding policies.

In some examples, storage device 102 may include and/or represent any type or form of volatile or non-volatile memory device or medium capable of storing data and/or computer-readable instructions. In one example, storage device 102 may store, load, and/or maintain certain modules and/or computer-readable instructions executed by circuitry 104. For example, storage device 102 may store, load, and/or maintain all or a portion of service 106. Additionally or alternatively, storage device 102 may store, load, and/or maintain a database that associates policies, policy tokens, network devices, and/or devices names with one another. Examples of storage device 102 include, without limitation, random access memory (RAM), read only memory (ROM), flash memory, hard disk drives (HDDs), solid-state drives (SSDs), optical disk drives, caches, portions of one or more of the same, variations or combinations of one or more of the same, and/or any other suitable memory devices.

In some examples, circuitry 104 may include and/or represent one or more electrical and/or electronic circuits capable of processing, applying, modifying, transforming, transmitting, receiving, and/or executing instructions and/or data for server 100. In one example, circuitry 104 may access, read, write, and/or allocate memory in storage device 102 on server 100. Additionally or alternatively, circuitry 104 may receive, handle, process, and/or forward traffic (e.g., data and/or control packets) on server 100. Moreover, circuitry 104 may receive input from network administrators and/or generate policies based at least in part on such input.

In some examples, circuitry 104 may launch, perform, and/or execute certain executable files, code snippets, and/or computer-readable instructions to facilitate and/or support achieving quantum secure data in multi-tenant environments on server 100. Although illustrated as a single unit in FIG. 1, circuitry 104 may include and/or represent a collection of multiple processing units and/or electrical or electronic components that work and/or operate in conjunction with one another. Examples of circuitry 104 include, without limitation, processing devices, microprocessors, microcontrollers, application-specific integrated circuits (ASICs), central processing units (CPUs), graphics processing units (GPUs), field-programmable gate arrays (FPGAs), systems on chips (SoCs), parallel accelerated processors, tensor cores, integrated circuits, chiplets, optical modules, receivers, transmitters, transceivers, optical modules, trafficforwarding devices, portions of one or more of the same, variations or combinations of one or more of the same, and/or any other suitable circuitry.

In some examples, service 106 may include and/or represent any type or form of program, application, and/or service that achieves or provides quantum secure data in multi-tenant environments. In one example, service 106 may include and/or represent a TEAS. Accordingly, service 106 may secure and/or protect telemetry data and/or logs across various network devices and/or elements included in a network. Additionally or alternatively, service 106 may selectively provide access for authorized users to obtain and/or read such telemetry data and/or logs.

In some examples, server 100 may constitute and/or represent any type or form of physical computing device capable of reading computer-executable instructions, performing computations, transforming data, and/or providing services. In one example, server 100 may include and/or represent a single computing device. In another example, server 100 may include and/or represent a collection of multiple computing devices that work and/or operate in conjunction with one another. Server 100 may execute, perform, and/or provide service 106. Examples of server 100 include, without limitation, key servers, application servers, authorization servers, security servers, encryption servers, database servers, web servers, portions of one or more of the same, variations or combinations of one or more of the same, or any other suitable servers.

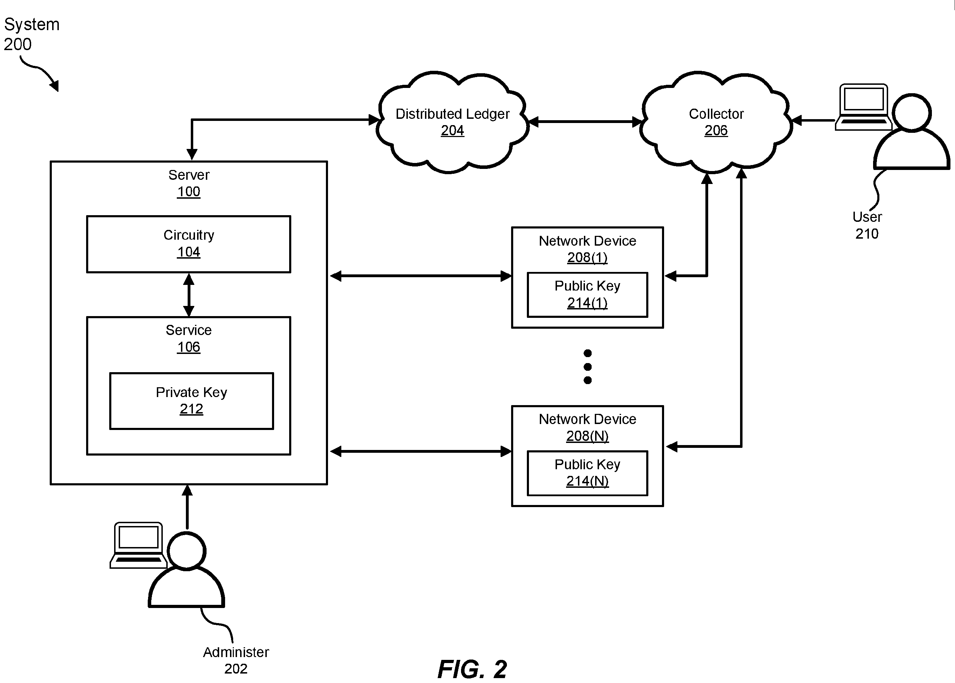

FIG. 2 illustrates at least a portion of an example system 200 that includes and/or represents a server 100, network devices 208(1)-(N), a distributed ledger 204, and/or a collector 206. In some examples, system 200 in FIG. 2 may include and/or represent certain devices, components, configurations, and/or features that perform and/or provide functionalities that are similar and/or identical to those described above in connection with FIG. 1. In one example, server 100 may be communicatively coupled to network devices 208(1)-(N) and/or distributed ledger 204. Additionally or alternatively, collector 206 may be communicatively coupled to network devices 208(1)-(N) and/or distributed ledger 204. Accordingly, server 100 and collector 206 may be communicatively coupled to one another via network devices 208(1)-(N) and/or distributed ledger 204.

In some examples, service 106 running on server 100 may be configured and/or programmed to generate or create one or more secret seed values and/or key identifiers for network devices 208(1)-(N). For example, service 106 running on server 100 may generate and/or create a PQPSK ID for network device 208(1) and another PQPSK ID for network device 208(N). In this example, service 106 may direct and/or cause server 100 to provide, send, and/or transmit the PQPSK IDs to network devices 208(1)-(N).

In some examples, service 106 running on server 100 may be configured and/or programmed to generate or create one or more access policies for telemetry data and/or logs. For example, service 106 running on server 100 may generate and/or create policies that control and/or define who is authorized to access such telemetry data and/or logs or who is not authorized to access such telemetry data and/or logs. In this example, service 106 running on server 100 may be configured and/or programmed to generate and/or create policy tokens that represent and/or correspond to such policies. Additionally or alternatively, service 106 may direct and/or cause server 100 to provide, send, and/or transmit the policies and/or policy tokens to network devices 208(1)-(N), distributed ledger 204, and/or collector 206.

In some examples, service 106 running on server 100 may be configured and/or programmed to generate the policies based at least in part on input obtained from an administrator 202. For example, administrator 202 may enter, upload, and/or provide input to server 100. In this example, service running on server 100 may obtain the input from administrator 202 and then generate or create the policies based at least in part on the input.

In some examples, network devices 208(1)-(N) may authenticate service 106 with cryptography before utilizing and/or implementing the secret seed values and/or key identifiers received from server 100. In one example, to facilitate and/or support such authentication, service 106 and/or server 100 may be equipped with a private key 212, and network devices 208(1)-(N) may be equipped with public keys 214(1)-(N), respectively. For example, service 106 running on server 100 may be configured and/or programmed to sign the PQPSK identifiers with private key 212. In this example, network devices 208(1)-(N) may be configured and/or programmed to validate the signatures of the PQPSK identifiers with public keys 214(1)-(N). By validating those signatures in this way, network devices 208(1)-(N) may be able to authenticate service 106.

In some examples, distributed ledger 204 may include and/or represent a blockchain whose records and/or entries are securely linked together via cryptographic hashes. Additionally or alternatively, collector 206 may include and/or represent a telemetry cluster consisting of multiple computing nodes that work and/or operate in conjunction with one another. For example, collector 206 may include and/or represent a cluster of telemetry collectors (e.g., syslog, etc.). In one example, and as will be described in greater detail below, a user 210 may submit a request to collector 206 to access, read, and/or view one or more logs.

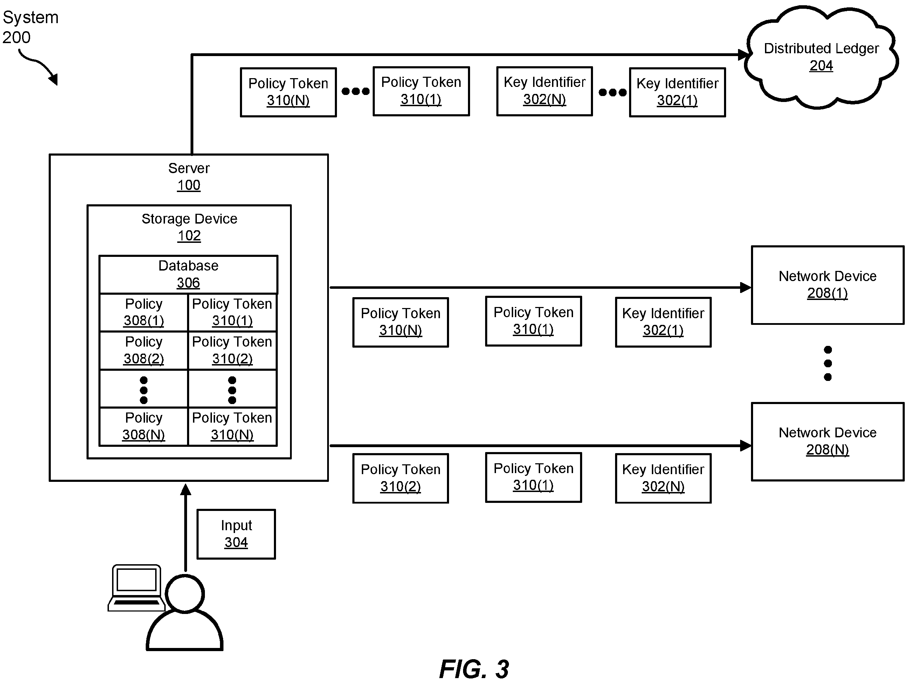

FIG. 3 illustrates a portion of an example implementation of system 200. In some examples, system 200 in FIG. 3 may include and/or represent certain devices, components, configurations, and/or features that perform and/or provide functionalities that are similar and/or identical to those described above in connection with either FIG. 1 or FIG. 2. In one example, server 100 may receive and/or obtain input 304 from administrator 202. In this example, service 106 running on server 100 may generate and/or create policies 308(1), 308(2), and 308(N) based at least in part on input 304. Additionally or alternatively, service 106 running on server 100 may generate and/or create policy tokens 310(1), 310(2), and 310(N) to represent and/or correspond to policies 308(1), 308(2), and 308(N), respectively. In certain implementations, policy tokens 310(1)-(N) may include and/or represent any type or form of identifiers and/or character strings capable of differentiating policies 308(1)-(N) from one another.

In some examples, storage device 102 of server 100 may include, store, and maintain a database 306 of policy tokens representative of policies that control access to certain telemetry data and/or logs. For example, database 306 may associate policies 308(1), 308(2), and 308(N) with policy tokens 310(1), 310(2), and/or 310(N), respectively. In this example, and as maintained by database 306, policy token 310(1) may correspond to and/or represent policy 308(1), policy token 310(2) may correspond to and/or represent policy 308(2), and/or policy token 310(3) may correspond to and/or represent policy 308(3).

In some examples, service 106 running on server 100 may generate and/or create key identifiers 302(1)-(N) for distribution to one or more of network devices 208(1)-(N), distributed ledger 204, and/or collector 206. In one example, service 106 running on server 100 may provide, send, and/or transmit key identifiers 302(1)-(N) and/or policy tokens 310(1)-(N) to distributed ledger 204. In this example, service 106 running on server 100 may provide, send, and/or transmit key identifier 302(1) and policy tokens 310(1) and 310(N) to network device 208(1). Additionally or alternatively, service 106 running on server 100 may provide, send, and/or transmit key identifier 302(N) and policy tokens 310(1) and 310(2) to network device 208(1).

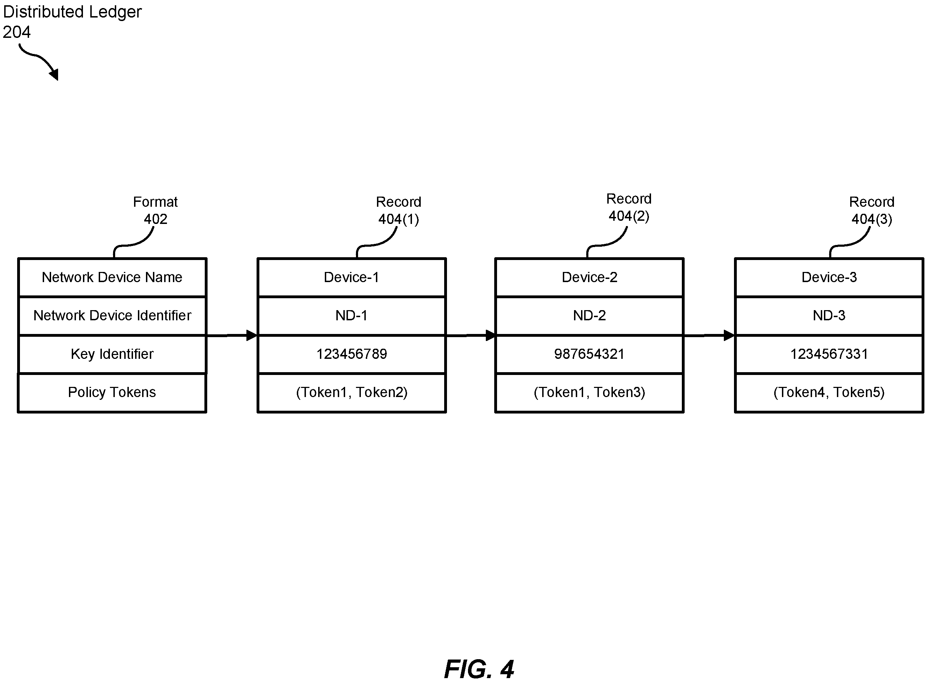

FIG. 4 illustrates a portion of an example implementation of distributed ledger 204. In some examples, distributed ledger 204 may include and/or represent one or more blockchains (e.g., an open source blockchains) and/or corresponding features or tools. As illustrated in FIG. 4, distributed ledger 204 may include and/or represent a plurality of records that follow and/or implement a certain format. For example, distributed ledger 204 may include and/or represent records 404(1), 404(2), and 404(3) that follow and/or implement a format 402. In certain implementations, distributed ledger 204 may also include and/or represent various other records that are not necessarily illustrated and/or labelled in FIG. 4.

In some examples, format 402 may include and/or represent a network device name, a network device identifier, a key identifier, and/or policy tokens. Accordingly, each of records 404(1)-(3) may follow and/or implement format 402 to associate a network device name, a network device identifier, a key identifier, and/or policy tokens with one another for the purpose of achieving and/or providing quantum secure data in multi-tenant environments. In one example, record 404(1) may correspond to and/or represent a network device named "Device-1" with a network device identifier "ND-1" that was provided a key identifier "123456789" and policy tokens "Token1" and "Token2". In another example, record 404(2) may correspond to and/or represent a network device named "Device-2" with a network device identifier "ND-2" that was provided a key identifier "987654321" and policy tokens "Token1" and "Token3". In an additional example, record 404(3) may correspond to and/or represent a network device named "Device-3" with a network device identifier "ND-3" that was provided a key identifier "1234567331" and policy tokens "Token4" and "Token5".

In some examples, server 100 and/or service 106 may be configured to provide such key identifiers, policy tokens, network device identifiers, and/or network device names to collector 206 via distributed ledger 204. For example, server 100 and/or service 106 may add and/or provide records 404(1)-(3) to distributed ledger 204. In this example, records 404(1)-(3) may associate the corresponding key identifiers, policy tokens, network device identifiers, and/or network device names with one another. By adding and/or providing records 404(1)-(3) to distributed ledger 204 in this way, collector 206 may be able to retrieve, fetch, and/or obtain records 404(1)-(3) or any of their contents from distributed ledger 204.

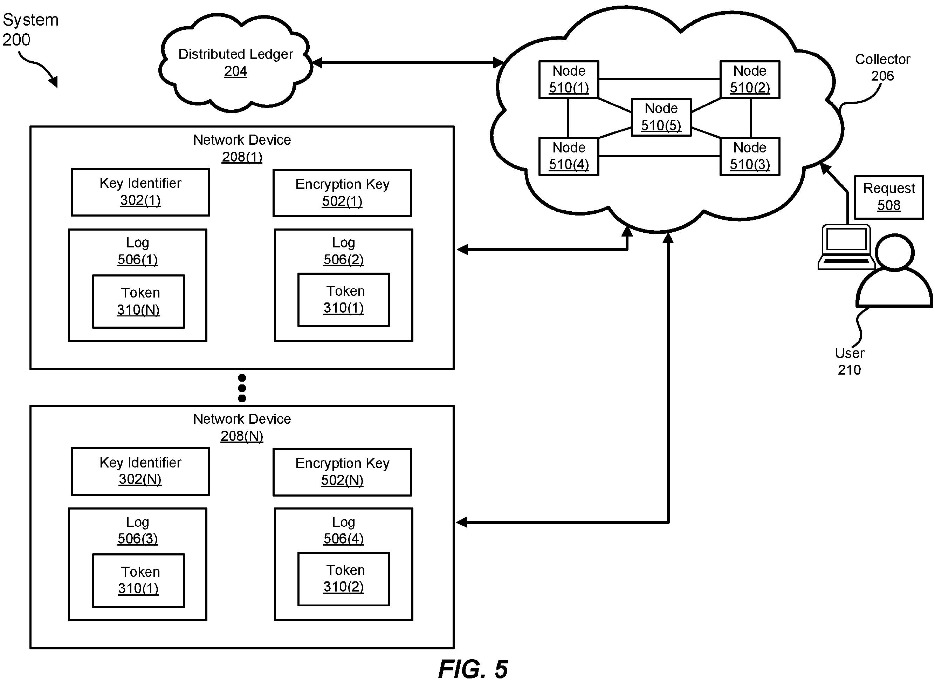

FIG. 5 illustrates a portion of an example implementation of system 200. In some examples, system 200 in FIG. 5 may include and/or represent certain devices, components, configurations, and/or features that perform and/or provide functionalities that are similar and/or identical to those described above in connection with any of FIGS. 1-5. In one example, network device 208(1) may receive and/or obtain key identifier 302(1) and/or tokens 310(1) and 310(N) from server 100 and/or service 106. Additionally or alternatively, network device 208(N) may receive and/or obtain key identifier 302(N) and/or tokens 310(1) and 310(2) from server 100 and/or service 106.

In some examples, network device 208(1) may generate and/or create an encryption key 502(1) based at least in part on key identifier 302(1). Additionally or alternatively, network device 208(N) may generate and/or create an encryption key 502(N) based at least in part on key identifier 302(N). Network devices 208(1)-(N) may be able to generate and/or create such encryption keys using any type or form of cryptographic techniques. Examples of such cryptographic techniques include, without limitation, public-key algorithms, symmetric-key algorithms, random number generation, pseudorandom number generation, distributed key generation, portions of one or more of the same, variations or combinations of one or more of the same, or any other suitable cryptographic techniques.

In some examples, network device 208(1) may identify, generate, and/or obtain logs 506(1) and 506(2). In one example, network device 208(1) may identify and/or discover one or more attributes of logs 506(1) and 506(2). In this example, network device 208(1) may search the policy tokens received and/or obtained from server 100 or service 106 for any policy tokens that represent policies matching those attributes of logs 506(1) and 506(2). For example, network device 208(1) may determine and/or find that the policy represented by policy token 310(N) matches and/or coincides with one or more attributes of log 506(1) based at least in part on the search. Additionally or alternatively, network device 208(1) may determine and/or find that the policy represented by policy token 310(1) matches and/or coincides with one or more attributes of log 506(2) based at least in part on the search.

In some examples, network device 208(1) may apply policy token 310(N) to log 506(1) based at least in part on matching criteria between the policy represented by policy token 310(N) and log 506(1). For example, network device 208(1) may attach, tag, and/or append policy token 310(N) to log 506(1). In one example, network device 208(1) may apply policy token 310(1) to log 506(2) based at least in part on matching criteria between the policy represented by policy token 310(1) and log 506(2). For example, network device 208(1) may attach, tag, and/or append policy token 310(1) to log 506(2).

In some examples, network device 208(1) may encrypt logs 506(1) and 506(2) with encryption key 502(1). In one example, network device 208(1) may encrypt logs 506(1) and 506(2) after the application of policy tokens 310(N) and 310(1), respectively. In another example, network device 208(1) may encrypt logs 506(1) and 506(2) before the application of policy tokens 310(N) and 310(1), respectively. Network device 208(1) may then provide, send, and/or transmit encrypted versions of logs 506(1) and 506(2) to collector 206.

In some examples, network device 208(N) may identify, generate, and/or obtain logs 506(3) and 506(4). In one example, network device 208(N) may identify and/or discover one or more attributes of logs 506(3) and 506(4). In this example, network device 208(N) may search the policy tokens received and/or obtained from server 100 or service 106 for any policy tokens that represent policies matching those attributes of logs 506(3) and 506(4). For example, network device 208(N) may determine and/or find that the policy represented by policy token 310(1) matches and/or coincides with one or more attributes of log 506(3) based at least in part on the search. Additionally or alternatively, network device 208(N) may determine and/or find that the policy represented by policy token 310(2) matches and/or coincides with one or more attributes of log 506(4) based at least in part on the search.

In some examples, network device 208(N) may apply policy token 310(1) to log 506(3) based at least in part on matching criteria between the policy represented by policy token 310(1) and log 506(3). For example, network device 208(N) may attach, tag, and/or append policy token 310(1) to log 506(3) in response to determining that log 506(3) is subjected to the policy represented by policy token 310(1). In one example, network device 208(N) may apply policy token 310(2) to log 506(4) based at least in part on matching criteria between the policy represented by policy token 310(2) and log 506(4). For example, network device 208(N) may attach, tag, and/or append policy token 310(2) to log 506(4) in response to determining that log 506(4) is subjected to the policy represented by policy token 310(2).

In some examples, network device 208(N) may encrypt logs 506(3) and 506(4) with encryption key 502(N). In one example, network device 208(N) may encrypt logs 506(3) and 506(4) after the application of policy tokens 310(1) and 310(2), respectively. In another example, network device 208(N) may encrypt logs 506(3) and 506(4) before the application of policy tokens 310(1) and 310(2), respectively. Network device 208(N) may then provide, send, and/or transmit encrypted versions of logs 506(3) and 506(4) to collector 206.

Various attributes may be used by network devices 208(1)-(N) to determine which policies correspond and/or apply to the telemetry data and/or logs. For example, policies pertaining to a specific entity, customer, and/or tenant may correspond and/or apply to telemetry data and/or logs pertaining to that specific entity, customer, and/or tenant. As a result, such policies may enable the specific entity, customer, and/or tenant to access such telemetry data and/or logs. In addition, such policies may preclude any or all other entities, customers, and/or tenants from accessing such telemetry data and/or logs. Examples of attributes capable of being used to determine which policies correspond or apply to telemetry logs include, without limitation, specific entities, specific customers, specific tenants, specific users, specific roles, groups of users and/or tenants, users or groups authorized by an authority, users or groups with specific security levels, combinations or variations of one or more of the same, and/or any other suitable attributes.

System 200 may implement and/or apply various types and/or models of access control in connection with such attributes and/or policies. Examples of such access control types and/or models include, without limitation, discretionary access control (DAC), role-based access control (RBAC), mandatory access control (MAC), and/or attribute-based access control (ABAC), combinations or variations of one or more of the same, and/or any other suitable access control types or models.

In some examples, collector 206 may be configured and/or programmed to receive and/or obtain a request 508 from user 210 to access one or more of logs 506(1)-(4). For example, user 210 may submit request 508 to collector 206 in an attempt to access, read, and/or view log 506(1). In this example, user 210 may be authorized to access, read, and/or view any logs subjected to the policy represented by policy token 310(N).

In some examples, collector 206 may be configured to and/or programmed to determine whether or not user 210 is authorized to access log 506(1) based at least in part on policy token 310(N), which is appended and/or tagged to log 506(1). For example, collector 206 may identify and/or find policy token 310(N) appended and/or tagged to log 506(1). In this example, collector 206 may analyze and/or evaluate the policy represented by policy token 310(N). Upon doing so, collector 206 may determine that user 210 is authorized to access, read, and/or view log 506(1). In certain implementations, collector 206 may satisfy request 508 by decrypting log 506(1) with key identifier 302(1) and then providing user 210 with access to a decrypted version of log 506(1).

As another example, user 210 may submit another request to collector 206 in an attempt to access, read, and/or view log 506(4). In one example, user 210 may be authorized to access, read, and/or view any logs subjected to the policy represented by policy token 310(1). In this example, collector 206 may identify and/or find policy token 310(2) appended and/or tagged to log 506(4). In this example, collector 206 may analyze and/or evaluate the policy represented by policy token 310(2). Upon doing so, collector 206 may determine that user 210 is not authorized to access, read, and/or view log 506(4). In certain implementations, collector 206 may refuse to satisfy this request due at least in part to user 210 not being authorized to access log 506(4).

In some examples, collector 206 may include and/or represent a telemetry cluster consisting of nodes 510(1), 510(2), 510(3), 510(4), and 510(5) that work and/or operate in conjunction with one another. In one example, nodes 510(1)-(5) may constitute and/or represent a cluster of telemetry collectors (e.g., syslog, etc.).

In some examples, the various devices and systems described in connection with FIGS. 1-5 may include and/or represent one or more additional circuits, components, and/or features that are not necessarily illustrated and/or labeled in FIGS. 1-5. For example, the devices illustrated in FIGS. 1-5 may also include and/or represent additional analog and/or digital circuitry, onboard logic, transistors, transmitters, receivers, transceivers, antennas, resistors, capacitors, diodes, inductors, switches, registers, flipflops, connections, traces, buses, semiconductor (e.g., silicon) devices and/or structures, processing devices, storage devices, circuit boards, sensors, packages, substrates, housings, combinations or variations of one or more of the same, and/or any other suitable components that facilitate and/or support quantum secure data in multi-tenant environments. In certain implementations, one or more of these additional circuits, components, and/or features may be inserted and/or applied between any of the existing circuits, components, and/or features illustrated in FIGS. 1-5 consistent with the aims and/or objectives described herein. Accordingly, the couplings and/or connections described with reference to FIGS. 1-5 may be direct connections with no intermediate components, devices, and/or nodes or indirect connections with one or more intermediate components, devices, and/or nodes.

In some examples, the phrase "to couple" and/or the term "coupling", as used herein, may refer to a direct connection and/or an indirect connection. For example, a direct coupling between two components may constitute and/or represent a coupling in which those two components are directly connected to each other by a single node that provides continuity from one of those two components to the other. In other words, the direct coupling may exclude and/or omit any additional components between those two components.

Additionally or alternatively, an indirect coupling between two components may constitute and/or represent a coupling in which those two components are indirectly connected to each other by multiple nodes that fail to provide continuity from one of those two components to the other. In other words, the indirect coupling may include and/or incorporate at least one additional component between those two components.

FIG. 6 is a flow diagram of an example method 600 for achieving quantum secure data in multi-tenant environments. In one example, the steps shown in FIG. 6 may be achieved and/or accomplished by a system, computing device, and/or server for facilitating and/or supporting secure data in multi-tenant environments. Additionally or alternatively, the steps shown in FIG. 6 may incorporate and/or involve certain sub-steps and/or variations consistent with the descriptions provided above in connection with FIGS. 1-5.

As illustrated in FIG. 6, method 600 may include the step of providing, by a server to a network device, a key identifier that enables the network device to generate an encryption key for encrypting one or more logs (610). Step 610 may be performed in a variety of ways, including any of those described above in connection with FIGS. 1-5. For example, a server and/or service may provide, send, and/or transmit a key identifier to a network device. By doing so, the server and/or service may enable the network device to generate an encryption key for encrypting one or more logs.

Method 600 may also include the step of providing, by the server to a collector, the key identifier to enable the collector to decrypt the logs (620). Step 620 may be performed in a variety of ways, including any of those described above in connection with FIGS. 1-5. For example, the server and/or service may provide, send, and/or transmit the key identifier to a collector via a distributed ledger. By doing so, the server and/or service may enable the collector to decrypt the logs.

Method 600 may further include the step of providing, by the server to the network device, one or more policy tokens representative of one or more policies that control access to the logs (630). Step 630 may be performed in a variety of ways, including any of those described above in connection with FIGS. 1-5. For example, the server and/or service may provide, send, and/or transmit one or more policy tokens to the network device. In this example, the policy tokens may represent one or more policies that control access to the logs.

Method 600 may additionally include the step of providing, by the server to the collector, the policy tokens to enable the collector to enforce the policies represented by the policy tokens applied by the network device to the logs (640). Step 640 may be performed in a variety of ways, including any of those described above in connection with FIGS. 1-5. For example, the server and/or service may provide, send, and/or transmit the policy tokens to the collector via the distributed ledger. By doing so, the server and/or service may enable the collector to enforce the policies represented by the policy tokens applied by the network device to the logs.

FIG. 7 is a block diagram of an example computing system 700 capable of implementing and/or being used in connection with one or more of the embodiments described and/or illustrated herein. In some embodiments, all or a portion of computing system 700 may perform and/or be a means for performing, either alone or in combination with other elements, one or more of the steps described in connection with FIG. 6. All or a portion of computing system 700 may also perform and/or be a means for performing and/or implementing any other steps, methods, or processes described and/or illustrated herein.

Computing system 700 broadly represents any type or form of electrical load, including a single or multi-processor computing device or system capable of executing computer-readable instructions. Examples of computing system 700 include, without limitation, workstations, laptops, client-side terminals, servers, distributed computing systems, mobile devices, network switches, network routers (e.g., backbone routers, edge routers, core routers, mobile service routers, broadband routers, etc.), network appliances (e.g., network security appliances, network control appliances, network timing appliances, SSL VPN (Secure Sockets Layer Virtual Private Network) appliances, etc.), network controllers, gateways (e.g., service gateways, mobile packet gateways, multi-access gateways, security gateways, etc.), and/or any other type or form of computing system or device.

Computing system 700 may be programmed, configured, and/or otherwise designed to comply with one or more networking protocols. According to certain embodiments, computing system 700 may be designed to work with protocols of one or more layers of the Open Systems Interconnection (OSI) reference model, such as a physical layer protocol, a link layer protocol, a network layer protocol, a transport layer protocol, a session layer protocol, a presentation layer protocol, and/or an application layer protocol. For example, computing system 700 may include a network device configured according to a Universal Serial Bus (USB) protocol, an Institute of Electrical and Electronics Engineers (IEEE) 1394 protocol, an Ethernet protocol, a T1 protocol, a Synchronous Optical Networking (SONET) protocol, a Synchronous Digital Hierarchy (SDH) protocol, an Integrated Services Digital Network (ISDN) protocol, an Asynchronous Transfer Mode (ATM) protocol, a Point-to-Point Protocol (PPP), a Point-to-Point Protocol over Ethernet (PPPoE), a Point-to-Point Protocol over ATM (PPPoA), a Bluetooth protocol, an IEEE 802.XX protocol, a frame relay protocol, a token ring protocol, a spanning tree protocol, and/or any other suitable protocol.

Computing system 700 may include various network and/or computing components. For example, computing system 700 may include at least one processor 714 and a system memory 716. Processor 714 generally represents any type or form of processing unit capable of processing data or interpreting and executing instructions. For example, processor 714 may represent an application-specific integrated circuit (ASIC), a system on a chip (e.g., a network processor), a hardware accelerator, a general purpose processor, and/or any other suitable processing element.

Processor 714 may process data according to one or more of the networking protocols discussed above. For example, processor 714 may execute or implement a portion of a protocol stack, may process packets, may perform memory operations (e.g., queuing packets for later processing), may execute end-user applications, and/or may perform any other processing tasks.

System memory 716 generally represents any type or form of volatile or non-volatile storage device or medium capable of storing data and/or other computer-readable instructions. Examples of system memory 716 include, without limitation, Random Access Memory (RAM), Read Only Memory (ROM), flash memory, or any other suitable memory device. Although not required, in certain embodiments computing system 700 may include both a volatile memory unit (such as, for example, system memory 716) and a non-volatile storage device (such as, for example, primary storage device 732, as described in detail below). System memory 716 may be implemented as shared memory and/or distributed memory in a network device. Furthermore, system memory 716 may store packets and/or other information used in networking operations.

In certain embodiments, example computing system 700 may also include one or more components or elements in addition to processor 714 and system memory 716. For example, as illustrated in FIG. 7, computing system 700 may include a memory controller 718, an Input/Output (I/O) controller 720, and a communication interface 722, each of which may be interconnected via communication infrastructure 712. Communication infrastructure 712 generally represents any type or form of infrastructure capable of facilitating communication between one or more components of a computing device. Examples of communication infrastructure 712 include, without limitation, a communication bus (such as a Serial ATA (SATA), an Industry Standard Architecture (ISA), a Peripheral Component Interconnect (PCI), a PCI Express (PCIe), and/or any other suitable bus), and a network.

Memory controller 718 generally represents any type or form of device capable of handling memory or data or controlling communication between one or more components of computing system 700. For example, in certain embodiments memory controller 718 may control communication between processor 714, system memory 716, and I/O controller 720 via communication infrastructure 712. In some embodiments, memory controller 718 may include a Direct Memory Access (DMA) unit that may transfer data (e.g., packets) to or from a link adapter.

I/O controller 720 generally represents any type or form of device or module capable of coordinating and/or controlling the input and output functions of a computing device. For example, in certain embodiments I/O controller 720 may control or facilitate transfer of data between one or more elements of computing system 700, such as processor 714, system memory 716, communication interface 722, and storage interface 730.

Communication interface 722 broadly represents any type or form of communication device or adapter capable of facilitating communication between example computing system 700 and one or more additional devices. For example, in certain embodiments communication interface 722 may facilitate communication between computing system 700 and a private or public network including additional computing systems. Examples of communication interface 722 include, without limitation, a link adapter, a wired network interface (such as a network interface card), a wireless network interface (such as a wireless network interface card), and any other suitable interface. In at least one embodiment, communication interface 722 may provide a direct connection to a remote server via a direct link to a network, such as the Internet. Communication interface 722 may also indirectly provide such a connection through, for example, a local area network (such as an Ethernet network), a personal area network, a wide area network, a private network (e.g., a virtual private network), a telephone or cable network, a cellular telephone connection, a satellite data connection, or any other suitable connection.

In certain embodiments, communication interface 722 may also represent a host adapter configured to facilitate communication between computing system 700 and one or more additional network or storage devices via an external bus or communications channel. Examples of host adapters include, without limitation, Small Computer System Interface (SCSI) host adapters, Universal Serial Bus (USB) host adapters, IEEE 1394 host adapters, Advanced Technology Attachment (ATA), Parallel ATA (PATA), Serial ATA (SATA), and External SATA (eSATA) host adapters, Fibre Channel interface adapters, Ethernet adapters, or the like. Communication interface 722 may also enable computing system 700 to engage in distributed or remote computing. For example, communication interface 722 may receive instructions from a remote device or send instructions to a remote device for execution.

As illustrated in FIG. 7, example computing system 700 may also include a primary storage device 732 and/or a backup storage device 734 coupled to communication infrastructure 712 via a storage interface 730. Storage devices 732 and 734 generally represent any type or form of storage device or medium capable of storing data and/or other computer-readable instructions. For example, storage devices 732 and 734 may represent a magnetic disk drive (e.g., a so-called hard drive), a solid state drive, a floppy disk drive, a magnetic tape drive, an optical disk drive, a flash drive, or the like. Storage interface 730 generally represents any type or form of interface or device for transferring data between storage devices 732 and 734 and other components of computing system 700.

In certain embodiments, storage devices 732 and 734 may be configured to read from and/or write to a removable storage unit configured to store computer software, data, or other computer-readable information. Examples of suitable removable storage units include, without limitation, a floppy disk, a magnetic tape, an optical disk, a flash memory device, or the like. Storage devices 732 and 734 may also include other similar structures or devices for allowing computer software, data, or other computer-readable instructions to be loaded into computing system 700. For example, storage devices 732 and 734 may be configured to read and write software, data, or other computer-readable information. Storage devices 732 and 734 may be a part of computing system 700 or may be separate devices accessed through other interface systems.

Many other devices or subsystems may be connected to computing system 700. Conversely, all of the components and devices illustrated in FIG. 7 need not be present to practice the embodiments described and/or illustrated herein. The devices and subsystems referenced above may also be interconnected in different ways from those shown in FIG. 7. Computing system 700 may also employ any number of software, firmware, and/or hardware configurations. For example, one or more of the example embodiments disclosed herein may be encoded as a computer program (also referred to as computer software, software applications, computer-readable instructions, or computer control logic) comprised in a computer-readable medium. The term "computer-readable medium" may include computer-readable storage media and/or computer-readable transmission media. Computer-readable storage media refers generally to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives and floppy disks), optical-storage media (e.g., Compact Disks (CDs) and Digital Video Disks (DVDs)), electronic-storage media (e.g., solid-state drives and flash media), and other distribution systems. Computer-readable transmission media may include carrier waves, transmission signals or the like. A computer-readable transmission medium may convey instructions between components of a single computer system and/or between plural separate computer systems.

Therefore, from one perspective, there have been described approaches for a computing device capable of achieving quantum secure data in multi-tenant environments that may include (1) a cooling device and (2) circuitry communicatively coupled to the cooling device, wherein the circuitry is configured to (A) alternate between periods of high computing activity that increases heat emission and periods of low computing activity that decreases the heat emission and (B) direct the cooling device to decrease cooling power during the periods of high computing activity and increase the cooling power during the periods of low computing activity. Various other apparatuses, systems, and methods are also disclosed.

Further examples of the present teachings are set out in the following numbered clauses.

Clause 1. A system comprising: at least one network device; at least one collector; and at least one service configured to: provide, to the network device and the collector, a key identifier that enables the network device to generate an encryption key for encrypting one or more logs and enables the collector to decrypt the logs; provide, to the network device, one or more policy tokens representative of one or more policies that control access to the logs; and provide, to the collector, the policy tokens to enable the collector to enforce the policies represented by the policy tokens applied by the network device to the logs.

Clause 2. The system of clause 1, wherein the service is further configured to: generate the key identifier for distribution to the network device and the collector; and generate the policies for distribution to the network device and the collector.

Clause 3. The system of clause 2, wherein the service is further configured to: obtain input from an administrator; and generate the policies based at least in part on the input.

Clause 4. The system of clause 2 or 3, further comprising at least one additional network device; and wherein the service is further configured to: provide, to the additional network device and the collector, an additional key identifier that enables the additional network device to generate an additional encryption key for encrypting one or more additional logs and enables the collector to decrypt the logs; provide, to the additional network device, one or more additional policy tokens representative of one or more additional policies that control access to the additional logs; and provide, to the collector, the additional policy tokens to enable the collector to enforce the additional policies applied by the additional network device to the additional logs.

Clause 5. The system of clause 2, 3 or 4, wherein: the service is further configured to sign the key identifier with a private key; and the network device is further configured to authenticate the service by validating the signature of the key identifier with a public key corresponding to the private key.

Clause 6. The system of any of clauses 1 to 5, wherein the network device is further configured to: apply a first policy token included in the policy tokens to a first log included in the logs; and provide, to the collector, the first policy token together with the first log.

Clause 7. The system of clause 6, wherein the network device is further configured to: identify a certain attribute of the first log; search the policy tokens for a policy token representative of a policy that matches the certain attribute; determine, based at least in part on the search, that the first policy token represents a policy that matches the certain attribute; and apply the first policy token to the first log in response to determining that the first policy token represents the policy that matches the certain attribute.

Clause 8. The system of clause 6 or 7, wherein the network device is further configured to: apply a second policy token included in the policy tokens to a second log included in the logs; and provide, to the collector, the second policy token together with the second log.

Clause 9. The system of any of clauses 1 to 8, wherein the service is further configured to provide the key identifier and the policy tokens to the collector via a distributed ledger by: adding, to the distributed ledger, a record that associates a device identifier for the network device, the key identifier, and the policy tokens; and enabling the collector to obtain the key identifier and the policy tokens from the record via the distributed ledger.

Clause 10. The system of any of clauses 1 to 9, wherein the network device is further configured to: generate the encryption key based at least in part on the key identifier; and encrypt the logs with the encryption key.

Clause 11. The system of any of clauses 1 to 10, wherein the collector is further configured to: receive a request from a user to access a log included in the logs; determine that the user is authorized to access the log; and satisfy the request by decrypting the log with the key identifier and providing the user with access to the log.

Clause 12. The system of any of clauses 1 to 11, wherein the collector is further configured to: receive a request from a user to access a log included in the logs; determine that the user is not authorized to access the log; and refuse to satisfy the request due at least in part to the user not being authorized to access the log.

Clause 13. The system of any of clauses 1to 12 wherein: the key identifier comprises a post-quantum pre-shared key identifier; and the encryption key comprises a post-quantum pre-shared key.

Clause 14. A server comprising: at least one storage device configured to maintain a database of policy tokens representative of policies that control access to certain logs; and circuitry communicatively coupled to the storage device, wherein the circuitry is configured to: provide, to a network device and a collector, a key identifier that enables the network device to generate an encryption key for encrypting one or more logs and enables the collector to decrypt the one or more logs; provide, to the network device, one or more policy tokens representative of one or more policies that control access to the one or more logs; and provide, to the collector, the one or more policy tokens to enable the collector to enforce the one or more policies represented by the one or more policy tokens applied by the network device to the one or more logs.

Clause 15. The server of clause 14, wherein the circuitry is further configured to: generate the key identifier for distribution to the network device and the collector; and generate the one or more policies for distribution to the network device and the collector.

Clause 16. The server of clause 15, wherein the circuitry is further configured to: obtain input from an administrator; and generate the one or more policies based at least in part on the input.

Clause 17. The server of clause 15 or 16, wherein the circuitry is further configured to: provide, to an additional network device and the collector, an additional key identifier that enables the additional network device to generate an additional encryption key for encrypting one or more additional logs and enables the collector to decrypt the one or more additional logs; provide, to the additional network device, one or more additional policy tokens representative of the one or more additional policies that control access to the one or more additional logs; and provide, to the collector, the one or more additional policy tokens to enable the collector to enforce the one or more additional policies applied by the additional network device to the one or more additional logs.

Clause 18. The server of any of clauses 14 to 17, wherein the circuitry is further configured to sign the key identifier with a private key to enable the network device to validate the signature of the key identifier with a public key corresponding to the private key.

Clause 19. The server of any of clauses 14 to 18, wherein the circuitry is further configured to provide the key identifier and the one or more policy tokens to the collector via a distributed ledger by: adding, to the distributed ledger, a record that associates a device identifier for the network device, the key identifier, and the one or more policy tokens; and enabling the collector to obtain the key identifier and the one or more policy tokens from the distributed ledger.

Clause 20. A method comprising: providing, by a server to a network device, a key identifier that enables the network device to generate an encryption key for encrypting one or more logs; providing, by the server to a collector, the key identifier to enable the collector to decrypt the logs; providing, by the server to the network device, one or more policy tokens representative of one or more policies that control access to the logs; and providing, by the server to the collector, the policy tokens to enable the collector to enforce the policies represented by the policy tokens applied by the network device to the logs.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered as being by way of example in nature since many other architectures can be implemented to achieve the same functionality.

In some examples, all or a portion of server 100 in FIG. 1 may represent portions of a cloud-computing or network-based environment. Cloud-computing and network-based environments may provide various services and applications via the Internet. These cloud-computing and network-based services (e.g., software as a service, platform as a service, infrastructure as a service, etc.) may be accessible through a web browser or other remote interface. Various functions described herein may also provide network switching capabilities, gateway access capabilities, network security functions, content caching and delivery services for a network, network control services, and/or and other networking functionality.

In addition, one or more of the modules described herein may transform data, physical devices, and/or representations of physical devices from one form to another. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

The preceding description has been provided to enable others skilled in the art to best utilize various aspects of the example embodiments disclosed herein. This description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A system comprising:
at least one network device;
at least one collector; and
at least one service configured to:
provide, to the network device and the collector, a key identifier that enables the network device to generate an encryption key for encrypting one or more logs and enables the collector to decrypt the logs;
provide, to the network device, one or more policy tokens representative of one or more policies that control access to the logs; and
provide, to the collector, the policy tokens to enable the collector to enforce the policies represented by the policy tokens applied by the network device to the logs.

2. The system of claim 1, wherein the service is further configured to:
generate the key identifier for distribution to the network device and the collector; and
generate the policies for distribution to the network device and the collector.

3. The system of claim 2, wherein the service is further configured to:
obtain input from an administrator; and
generate the policies based at least in part on the input.

4. The system of claim 2 or 3, further comprising at least one additional network device; and wherein the service is further configured to:
provide, to the additional network device and the collector, an additional key identifier that enables the additional network device to generate an additional encryption key for encrypting one or more additional logs and enables the collector to decrypt the logs;
provide, to the additional network device, one or more additional policy tokens representative of one or more additional policies that control access to the additional logs; and
provide, to the collector, the additional policy tokens to enable the collector to enforce the additional policies applied by the additional network device to the additional logs.

5. The system of claim 2, 3 or 4, wherein:
the service is further configured to sign the key identifier with a private key; and
the network device is further configured to authenticate the service by validating the signature of the key identifier with a public key corresponding to the private key.

6. The system of any of claims 1 to 5, wherein the network device is further configured to:
apply a first policy token included in the policy tokens to a first log included in the logs; and
provide, to the collector, the first policy token together with the first log.

7. The system of claim 6, wherein the network device is further configured to:
identify a certain attribute of the first log;
search the policy tokens for a policy token representative of a policy that matches the certain attribute;
determine, based at least in part on the search, that the first policy token represents a policy that matches the certain attribute; and
apply the first policy token to the first log in response to determining that the first policy token represents the policy that matches the certain attribute.

8. The system of claim 6 or 7, wherein the network device is further configured to:
apply a second policy token included in the policy tokens to a second log included in the logs; and
provide, to the collector, the second policy token together with the second log.

9. The system of any of claims 1 to 8, wherein the service is further configured to provide the key identifier and the policy tokens to the collector via a distributed ledger by:
adding, to the distributed ledger, a record that associates a device identifier for the network device, the key identifier, and the policy tokens; and
enabling the collector to obtain the key identifier and the policy tokens from the record via the distributed ledger.

10. The system of any of claims 1 to 9, wherein the network device is further configured to:
generate the encryption key based at least in part on the key identifier; and
encrypt the logs with the encryption key.

11. The system of any of claims 1 to 10, wherein the collector is further configured to:
receive a request from a user to access a log included in the logs;
determine that the user is authorized to access the log; and
satisfy the request by decrypting the log with the key identifier and providing the user with access to the log.

12. The system of any of claims 1 to 11, wherein the collector is further configured to:
receive a request from a user to access a log included in the logs;
determine that the user is not authorized to access the log; and
refuse to satisfy the request due at least in part to the user not being authorized to access the log.

13. The system of any of claims 1 to 12, wherein:
the key identifier comprises a post-quantum pre-shared key identifier; and
the encryption key comprises a post-quantum pre-shared key.

14. A server comprising:
at least one storage device configured to maintain a database of policy tokens representative of policies that control access to certain logs; and
circuitry communicatively coupled to the storage device, wherein the circuitry is configured to:
provide, to a network device and a collector, a key identifier that enables the network device to generate an encryption key for encrypting one or more logs and enables the collector to decrypt the one or more logs;
provide, to the network device, one or more policy tokens representative of one or more policies that control access to the one or more logs; and
provide, to the collector, the one or more policy tokens to enable the collector to enforce the one or more policies represented by the one or more policy tokens applied by the network device to the one or more logs.

15. A method comprising:
providing, by a server to a network device, a key identifier that enables the network device to generate an encryption key for encrypting one or more logs;
providing, by the server to a collector, the key identifier to enable the collector to decrypt the logs;
providing, by the server to the network device, one or more policy tokens representative of one or more policies that control access to the logs; and
providing, by the server to the collector, the policy tokens to enable the collector to enforce the policies represented by the policy tokens applied by the network device to the logs.
